# EUROPEAN PATENT APPLICATION

(11) **EP 1 465 000 A2**
(43) Date of publication of application: **06.10.2004**
(21) Application number: 04015043.5
(22) Date of filing: 02.03.1998
(51) Int. Cl.: G02B 13/14

(54) **Refractive/diffractive infrared imager and optics**

(30) Priority: 27.03.1997 US 41734 P
(62) Divisional of application: 98908945.3
(71) Applicant: RAYTHEON COMPANY, Lexington, Massachusetts 02173 (US)
(72) Inventor: Chipper, Robert B., Allen TX 75002 (US)
(74) Representative: UEXKÜLL & STOLBERG

(57) **Abstract**

The invention relates to an infrared transmitting achromatic lens group (30), comprising:
an infrared transmitting glass objective lens (10); and a diffractive color correction lens (28) having a substantially flat surface; characterized in that a color correcting diffractive surface (16) is formed on the diffractive color correction lens (28) to reduce chromatic aberrations.

## Description

### TECHNICAL FIELD OF THE INVENTION

This invention relates to an infrared imaging lens system and, more specifically, to an IR imager using diffractive surfaces to correct for color and/or field aberrations.

### BACKGROUND OF THE INVENTION

It is known that different frequencies of light do not focus at the same location after passing through a lens. For this reason, color correction has been built into prior art lens systems. This is true not only for lens systems that focus visible light, but also for infrared lens systems. A typical infrared (IR) system operates over a moderate waveband, such as approximately x 3 - 5 microns or 8 - 12 microns. Additionally, most lenses, particularly lenses with spherical surfaces, introduce field aberrations including astigmatism and coma.

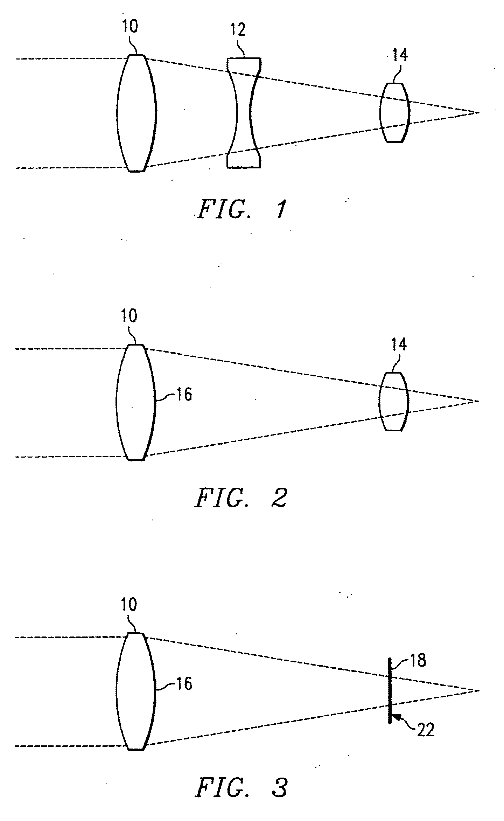

Fig. 1 shows a conventional single field-of-view (FOV) imager. It includes 3 refractive elements, the objective 10, color corrector lens 12, and-a field lens 14. The objective lens 10 is the primary focusing element which has the most power and is a converging lens. The objective lens collects the light from the desired object to be imaged and focuses this energy onto the detector. The objective lens is commonly made from germanium, due to germanium's high refractive index and low dispersion. Dispersion is the variation of refractive index with wavelength causing each wavelength to focus at a slightly different location. For an 8-12 micron waveband, these multiple foci would cause a blurring of the image. Thus, a color correcting lens is needed. The color corrector lens 12 is a negatively powered highly dispersive material used to bring all desired wavelengths of light to a common focus. The color corrector lens is typically made from zinc selenide. The field lens 14 is a positively powered lens used to correct field or image aberrations such as astigmatism and/or coma. The field lens is typically made from germanium.

### SUMMARY OF THE INVENTION

The terms diffractive optics or diffractive optical elements refer to those optical elements that base their operation on the utilization of the wave nature of light. This broad categorization can be divided into several subsections. Diffractive lenses are elements that perform functions similar to conventional refractive lenses, e.g., they form an image. Kinoforms are diffractive elements whose phase modulation is introduced by a surface relief pattern. Binary optics are kinoforms produced by photolithographic techniques, resulting in a "stair-step" approximation to the desired profile. Each photolithography step increases the number of levels in the surface by a factor of two, hence the term binary optics. Kinoforms are highly efficient diffractive elements.

Two references on this topic are "Binary Optics" by Veldkamp et al., Scientific American, May, 1992, pp. 92-97 and "Diffractive Optical Elements For Use In Infrared Systems" by Swanson et al., Optical Engineering vol. 28. No. 6, Jun., 1989, pp. 605-608. Recently, Veldkamp has used photolithography to approximate the kinoform surface profile. More recently, we have used diamond point turning (DPT) to create the proper kinoform surface for long wavelength (10 micron) IR optics, bypassing the binary approximation.

Due to their dispersive nature, diffractive elements can be used for color correction. Diffractive optical elements are highly dispersive in that they break up white light into its component colors from red at one end of the spectrum to blue at the other end. This dispersion is opposite in sign to that of most glasses and will cancel that of most conventional lenses. Therefore, over a small wavelength band, by combining conventional optics with diffractive optics, the chromatic aberration resulting from the dispersive characteristic of the glass can be reduced.

Typically, on a glass lens, the diffractive surface is a kinoform produced by diamond point turning, patterned and etched, or the like. Kinoforms are diffractive elements whose phase modulation is introduced by a surface relief pattern. The diffractive optical surface results in a step function whose surface is cut back by precisely one wavelength of the light frequency of interest (preferably 10 microns for operation in the 8 to 12 micron range) every time their thickness increases by that amount. The pattern required to yield the holographic element is provided by adding an additional term to the aspheric equation which provides a phase shift thereto.

Fig. 2 illustrates one approach to simplifying the conventional design. This improved design is similar to the conventional design, except that it replaces the color correcting lens with a diffractive surface 16 on the objective lens 10. The diffractive surface 16 is typically diamond-point turned onto the second surface of the objective lens. In the Fig. 2 design, the diffractive surface 16 is used for color correction only.

An infrared imager is disclosed. The imager comprises a refractive objective lens, such as an infrared transmitting glass lens, having a surface with a color correcting diffractive pattern and an infrared transmitting polymeric field lens having a substantially flat surface with a first field-correcting diffractive pattern, where the first field-correcting diffractive pattern operates to reduce aberrations of an image. In some embodiments, the imager further comprises a second field correcting diffractive pattern on the field lens, the first and second field-correcting diffractive pattern cooperating to reduce aberrations of the image. Preferably, the objective lens is a glass lens with the glass selected from the group consisting of (Se, chalcogenide glass, ZnS, ZnSe, GaAs, and TI-1173 glass.

Another infrared imager is disclosed. The imager comprises an infrared transmitting achromatic lens group. This achromatic group comprises a refractive objective lens, such as an infrared transmitting glass lens, and a second infrared transmitting lens. The second infrared transmitting lens has a substantially flat surface with a surface diffractive pattern, the surface diffractive pattern cooperating with the refractive lens to reduce chromatic aberrations. The imager further comprises an infrared transmitting polymeric field lens. The field lens has a substantially flat surface with a first field-correcting diffractive pattern, where the first field-correcting diffractive pattern operates to reduce aberrations of an image. In some embodiments, the field lens further comprises a second field-correcting diffractive pattern, the first and second field- correcting diffractive pattern cooperating to reduce aberrations of the image.

In some embodiments, either of these imagers further comprise one or more fold mirrors, windows, and/or filters. In some embodiments, the imager further comprises a chopper between the field lens and the image plane. The chopper may block or reflect the optical energy, or could comprise one or more optical elements that spoil or defocus the image. In some embodiments, flat surfaces that do not comprise diffractive surfaces comprise antireflective sub-wavelength structures.

An infrared transmitting achromatic lens group is disclosed. The achromatic group comprises an infrared transmitting refractive objective lens, such as an infrared transmitting glass lens, and a second infrared transmitting lens having a substantially flat surface with a surface diffractive pattern, the surface diffractive pattern cooperating with the refractive lens to reduce chromatic aberrations. Preferably, the second infrared transmitting lens is a polymeric sheet lens.

### BRIEF DESCRIPTION OF THE DRAWINGS

Fig. 1 shows a simplified view of a conventional single field-of-view (FOV) imager.
Fig. 2 shows a simplified view of an imager with a diffractive surface on the objective lens.
Fig. 3 shows simplified view of an imager with a diffractive surface on the objective lens and a polymer field lens.
Fig. 4 shows a 12° horizontal FOV imager with a diffractive surface on the objective lens.
Fig. 5 shows a 12° horizontal FOV imager according to an embodiment of the current invention.
Fig. 6 shows a 3° horizontal FOV imager according to an embodiment of the current invention.
Fig. 7 shows a 12° horizontal FOV imager according to an embodiment of the current invention.
Fig. 8 shows a 12° horizontal FOV imager according to an embodiment of the current invention.
Fig. 9 shows a chopper inserted in the optical path of an imager according to an embodiment of the current invention.
Fig. 10 shows a folded imager according to an embodiment of the current invention.
Fig. 11 shows a plot of phase vs. radius for the color correcting diffractive surface of the Fig. 7 imager.
Fig. 12 shows a plot of phase vs. radius for the first field correcting diffractive surface of the Fig. 7 imager.
Fig. 13 shows a plot of phase vs. radius for the second field correcting diffractive surface of the Fig. 7 imager.
Fig. 14 shows the theoretical MTF of the 12° FOV imager of Fig. 4.
Fig. 15 shows the theoretical MTF of the 12° FOV imager of Fig. 5.
Fig. 16 shows the theoretical MTF of the 12° FOV imager of Fig. 7.
Fig. 17 shows the theoretical MTF of the 12° FOV imager of Fig. 8.
Fig. 18 shows several types of diffractive achromatic lens groups.
Fig. 19 shows diffractive achromatic lens groups with color correcting diffractive lenses formed from alternate materials.

### DETAILED DESCRIPTION OF THE INVENTION

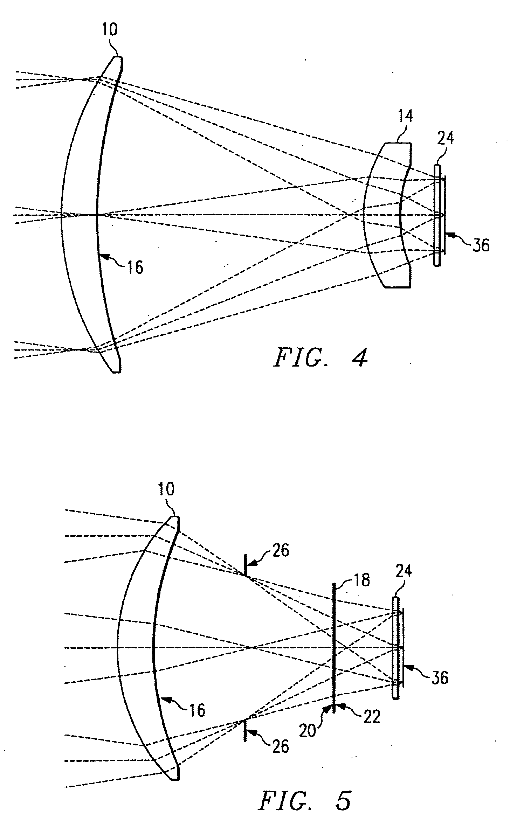

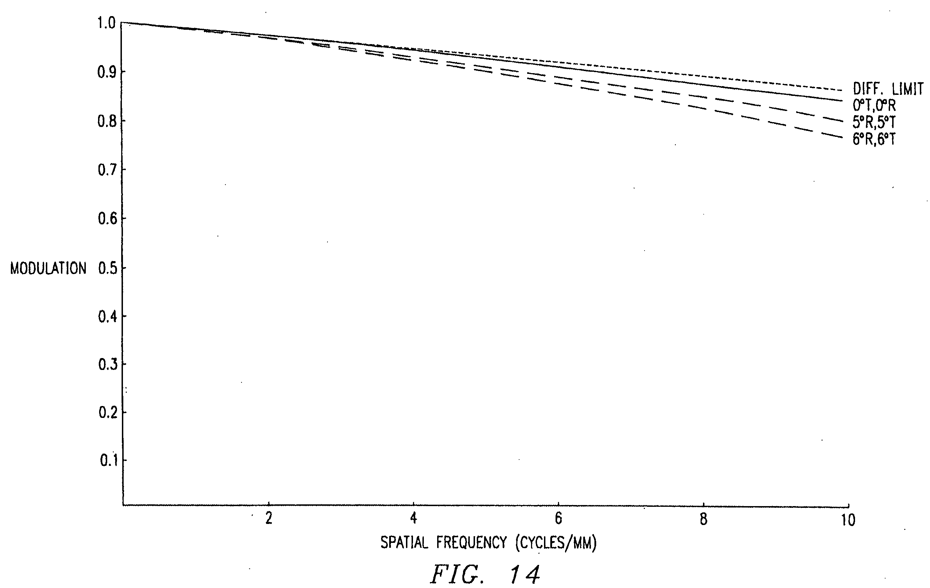

When designing an infrared imager, several parameters are often considered. These include modulation transfer function (MTF), both on-axis and off-axis; optical transmissivity; cost; size; weight; durability; and risk. A recent design of a 12 degree horizontal field-of-view (HFOV) imager for the 8 to 12 micron infrared band showed that a conventional imager with a color correcting diffractive surface on the objective lens could deliver good performance (MTF and transmissivity), high durability, and low risk. Fig. 4 shows this initial design and Fig. 14 shows the theoretical MTF of this initial design. However, known techniques did not allow significant cost and weight reductions, while maintaining performance. To solve this problem, I investigated several new classes of designs. Two approaches, replacing both the objective and the field lens with polymer diffractive lenses, and replacing the objective lens with a polymer diffractive lens, did not prove to be practical. However, one class of designs, which Fig. 3 illustrates in simplified form, showed promise. These designs maintained the glass objective with a color correcting diffractive surface, but used a polymer diffractive lens to correct field aberrations, such as astigmatism and coma. The polymer diffractive lens uses the infrared transmitting polymeric sheet taught in copending application titled, Durable Polymeric Optical Systems, Serial Number 08/289,404. This sheet is fabricated into a lens by forming a diffractive pattern on one or both sides. Typically, the diffractive pattern is embossed, but other pattern forming methods, such as etching, could be used. When embossing an IR transmitting polymeric sheet, it is preferable to first soften the sheet. Heating an IR transmitting polymeric sheet will soften it. Temperatures on the order of 150 degrees Celsius provide good results; but the diffractive pattern needs to be formed oversize to allow for shrinkage during cooling. An embossed diffractive could be a binary approximation. However, it is preferable to diamond point turn (DPT) a pure kinoform into an embossing tool.

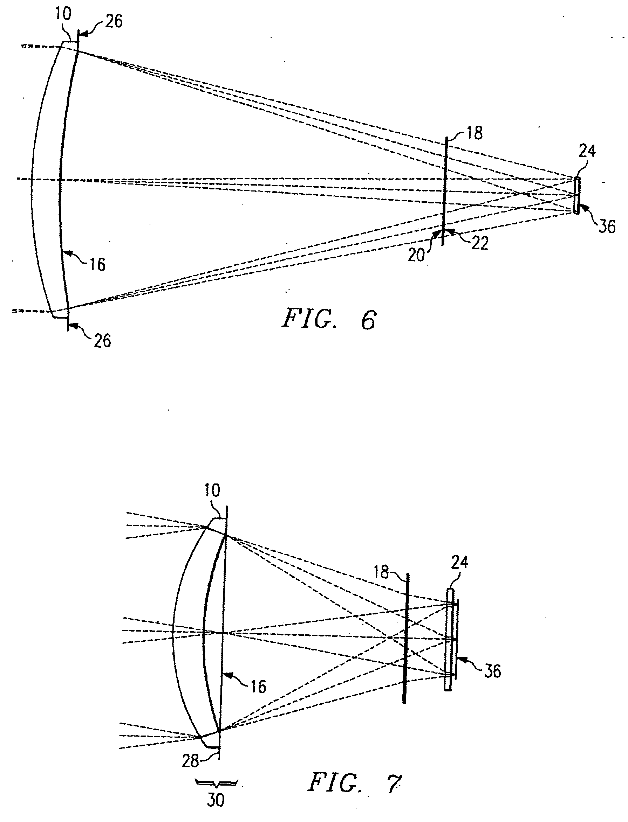

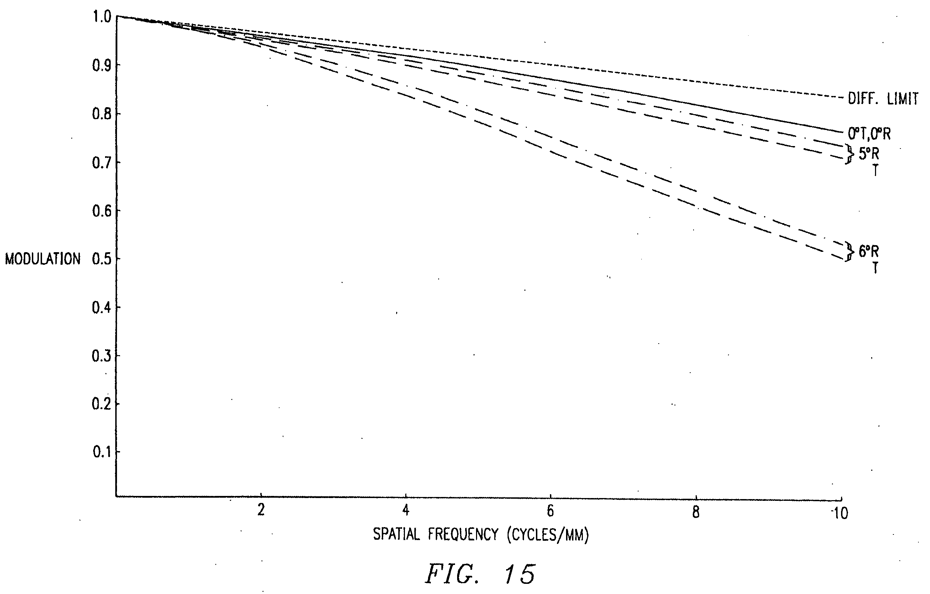

This investigation failed to produce a design that matched the MTF performance of the Fig. 4 design. However, a slightly lower performing design was possible. This design, shown in Fig. 5, is also a 12° HFOV design, but lighter and lower cost than the Fig. 4 design. As Fig. 15 shows, the off-axis MTF performance is noticeably less than the MTF of the Fig. 4 design. The Fig. 5 imager comprises an objective lens 10, with a color correcting diffractive surface 16, a substantially flat, diffractive field lens 18, formed from an IR transmitting polymer, with a first surface diffractive pattern 20, and a second surface diffractive pattern 22. Fig. 5 also shows a stop 26, a detector window 24, and the image plane 36, but does not show either a chopper or a scan mirror, as are commonly used in some types of IR systems. Fig. 6 shows a similar imager with a 3 degree HFOV. In this embodiment, stop 26 is located near the objective lens 10 mounting surface. Table 1 gives a summary of the different figure elements.

**Table 1.**

| Figure Elements | | | |
|---|---|---|---|
| Ref # | Specific Example | Functional Description | Preferred Alternates |
| 10 | TI-1173 | Objective Lens | Other chalogenide glass, Ge, ZnS, ZnSe, GaAs, Other IR transmissive materials |
| 12 | ZnSe | Color Correction Lens | Other IR transmissive materials |
| 14 | Ge | Field Lens | Other IR transmissive materials |
| 16 | Color Correcting Diffractive Surface | First Diffractive Surface | |
| 18 | Double sided diffractive polymer lens | Diffractive Field Lens | Single sided diffractive polymer lens w/ subwavelength structure, Single sided diffractive polymer lens, Other IR transmissive materials with diffractive surface(s) |
| 20 | First Field Correcting Diffractive Surface | Diffractive Field Lens First Surface | Subwavelength structure, flat surface |
| 22 | Second Field Correcting Diffractive Surface | Diffractive Field Lens Second Surface | First field correcting diffractive surface, subwavelength structure, flat surface |
| 24 | Ge | Detector Window | Other IR transmissive materials |
| 26 | | Stop | Stop integrated with lens mount |
| 28 | Single sided diffractive polymer lens | Diffractive color Correction Lens | Single sided diffractive polymer lens with AR subwavelength structure, single sided diffractive lens that corrects chromatic and non-chromatic aberrations, dual sided diffractive lens that corrects chromatic and non-chromatic aberrations, Other IR transmissive materials with diffractive surface(s) |
| 30 | Two element objective with diffractive lens that corrects chromatic aberrations | Diffractive Achromat | Two element objective group with diffractive lens that corrects chromatic and non-chromatic aberrations, Multi-element objective group with diffractive lens |
| 32 | Blocking | Chopper | Defocusing |
| 34 | | Fold Mirror | Multiple fold Mirrors, pivoting mirror, interface mirror |

This particular design uses a diffractive field lens 18 with both a first surface diffractive pattern 20, and a second surface diffractive pattern 22. Another embodiment of this design uses only a single diffractive pattern to correct the same aberrations as this dual pattern design. The dual pattern design was chosen because first pattern 20 and second pattern 22 are each simpler than a single pattern that corrected the same aberrations. A diffractive field lens 20 with a single diffractive pattern could have the single diffractive pattern as either a first surface diffractive pattern 20 or a second surface diffractive pattern 22. One advantage of a field lens with a single diffractive pattern is that it allows the other side of the lens to comprise an anti-reflective sub-wavelength-structure (a type of graded index), thus reducing Fresnel reflection losses. Physical Optics Corp. can manufacture embossing tools suitable for forming antireflective sub-wavelength structures on a flat surface of an optical element.

In another embodiment, the color correcting diffractive surface has been removed from objective lens 10. Instead, the color correcting diffractive surface 16 is formed on diffractive color correction lens 28, as shown in Fig. 7. In this embodiment, glass objective lens 10 and diffractive color correction lens 28 cooperate to form a diffractive achromat 30. This diffractive achromat is lower cost and lighter than a standard color correction scheme using two refractive lenses. In some applications, the low cost of polymer diffractive lenses may cause this diffractive achromat to be preferred over a diffractive surface on the objective lens. A diffractive achromat may show additional advantages when combined with a low performance lens, such as a low cost objective lens 10 with spherical surfaces. The color correcting diffractive surface 16 can be modified to also correct for aberrations due to a non-ideal objective lens, such as spherical aberrations. Alternately, the single diffractive surface could be split into 2 simpler diffractive surfaces, one on each side of diffractive lens 28. If diffractive lens 28 has only one diffractive surface, it may be preferable to form an anti-reflective sub-wavelength structure on the other surface, as described below.

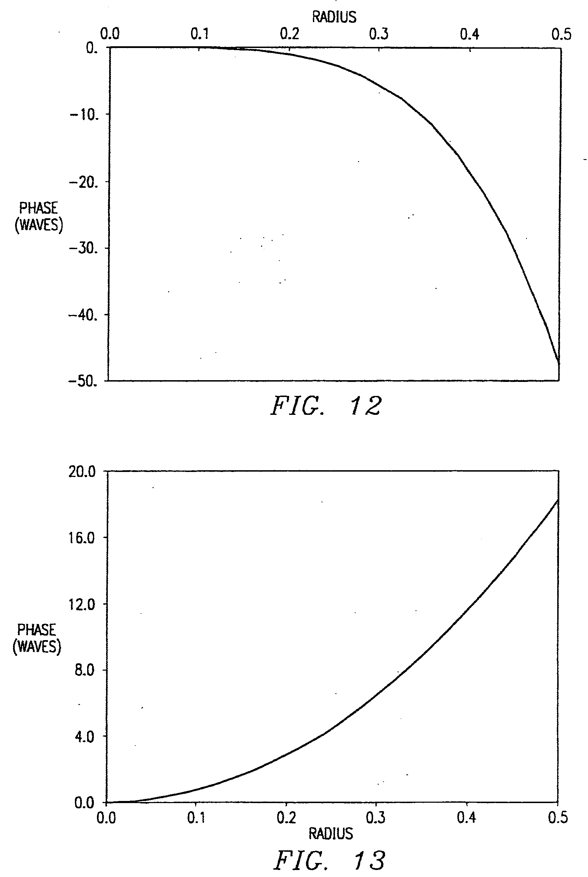

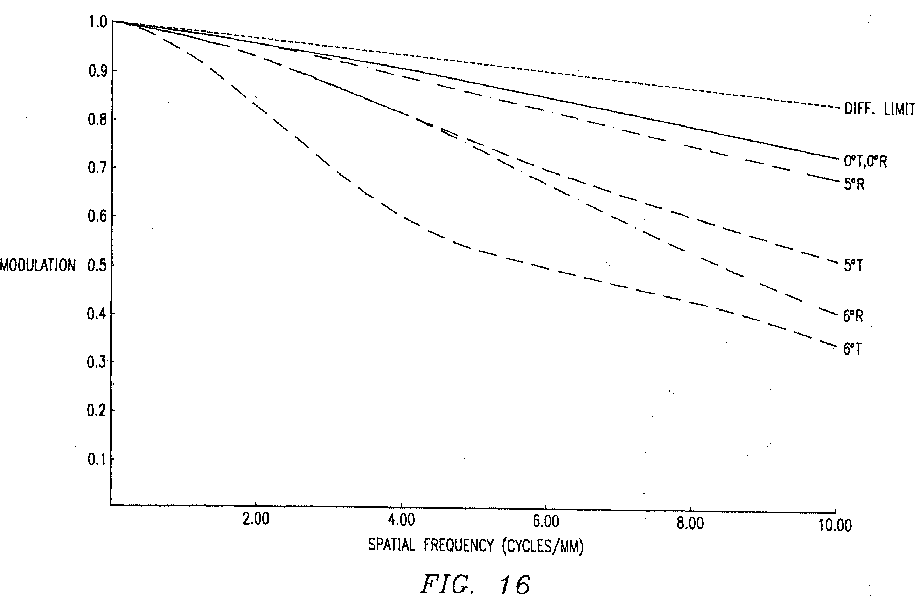

Table 2 shows the prescription and Fig. 16 shows the MTF performance of an embodiment of this design. Fig. 11, Fig. 12, and Fig. 13 show the phase vs. radius plots for the color correcting diffractive surface 16, the first field correcting diffractive surface 20, and the second field correcting diffractive surface 22, respectively. It should be noted that this information is only an illustrative example and should not be construed to limit the present invention.

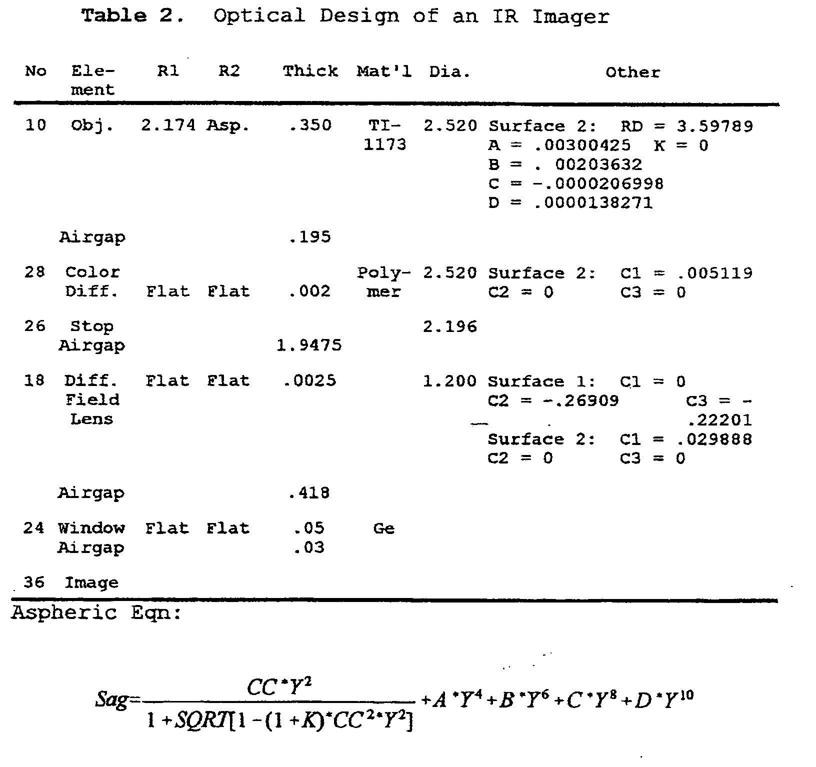

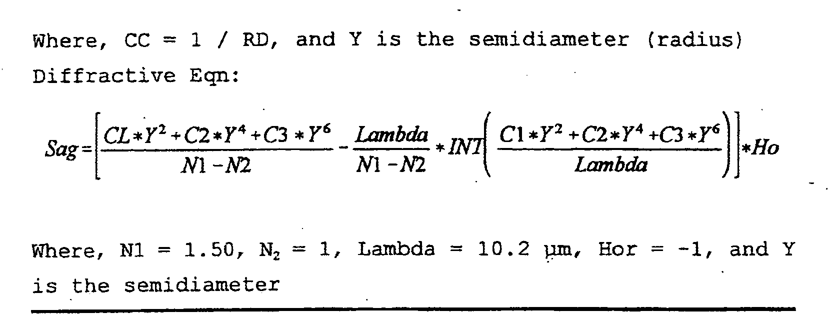

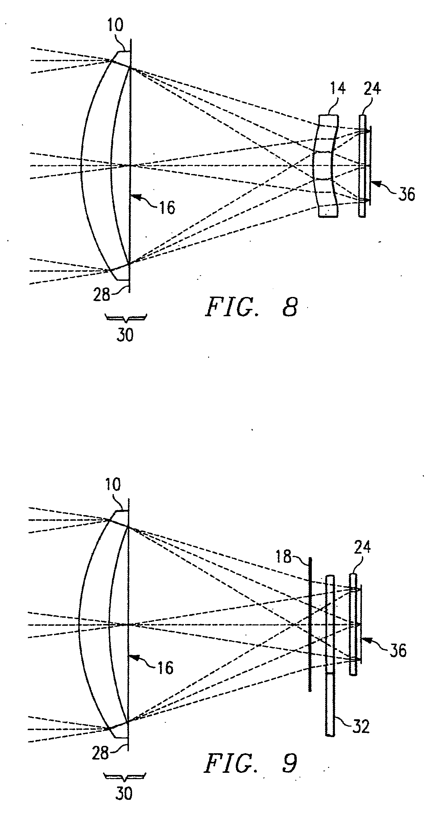

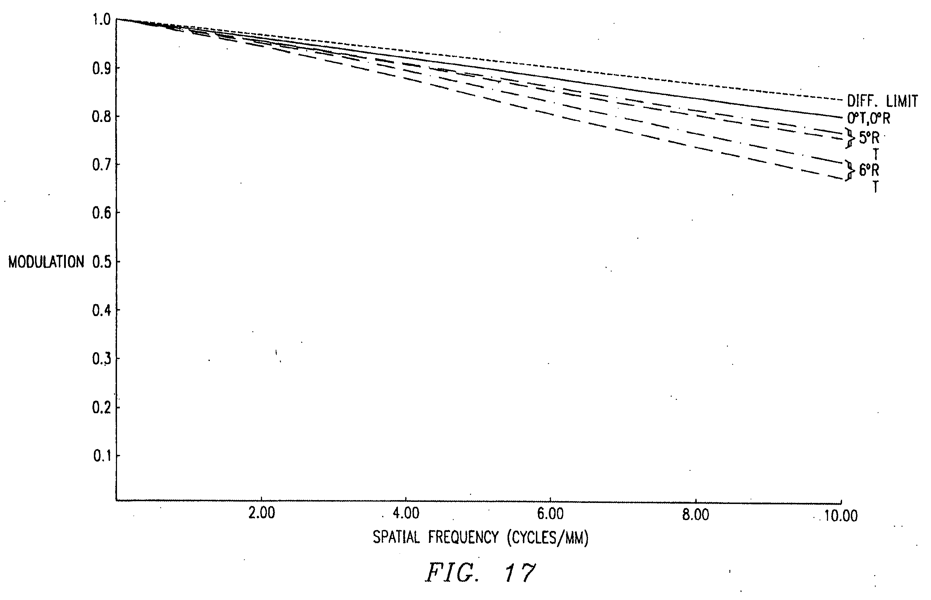

Fig. 8 shows another embodiment of this invention. This approach uses a conventional refractive field lens 14, with the diffractive achromat 30 from the Fig. 7 design. Fig. 17 shows that this design exhibits improved off-axis MTF performance over the Fig. 7 design.

Fig. 9 shows an infrared imager similar to Fig. 7, but incorporating a chopper 32 in front of the window 24. This chopper modulates the optical energy incident on the image plane 36, as required by some types of staring IR systems. There are many chopper designs known in the art. One type is an optically transparent window with an opaque pattern on portions of the window. In operation, the chopper 32 spins. When the opaque portion of the chopper enters the ray bundle, it blocks optical energy (from at least a portion of the scene) from reaching the detector located at the image plane. Other choppers replace the opaque portion with an optical element(s). One such scheme uses an optical diffuser or some other optical element, such as an array of microlenses, to defocus or spoil the image at the image plane. Although these choppers use elements with optical power, they are not using them to form an image; but, instead, to spoil the image. A chopper 32 is typically located where the optical ray bundle is small, such as between the field lens 18 and the window 24. However, some designs may locate the chopper in other locations.

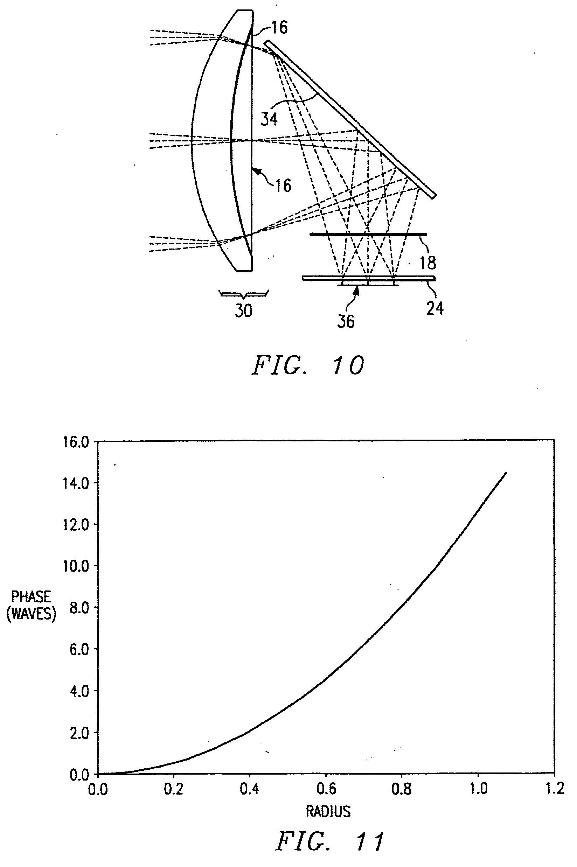

Fig. 10 shows an infrared imager similar to Fig. 7, but incorporating a fold mirror 34 between diffractive achromat 30 and diffractive field lens 18. The use of one or more fold mirrors and/or other elements without optical power (such as windows) are common packaging techniques. In some systems, including but not limited to scanning IR systems, a fold mirror may be mounted on a pivot. This would allow the mirror to be rotated, thus shifting the scene location at the image plane 36.

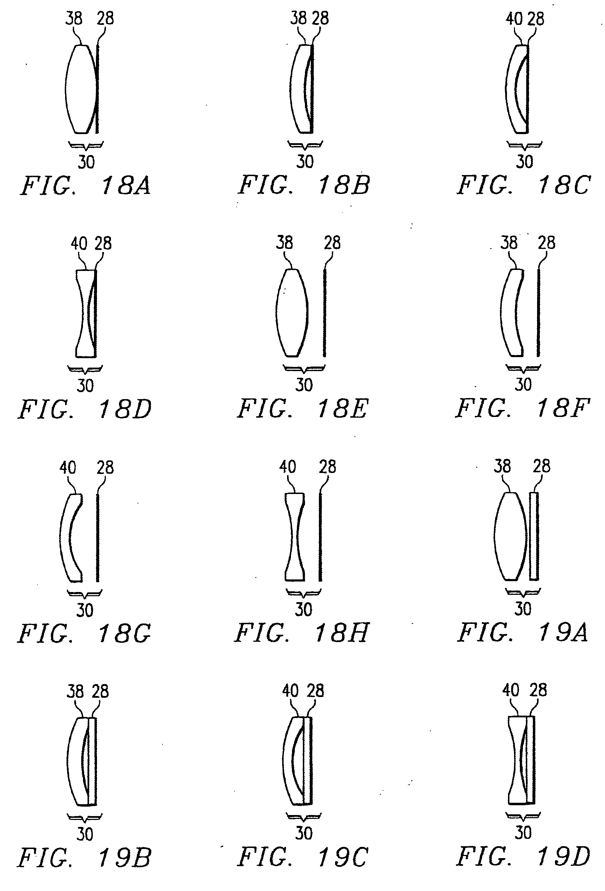

The invention is not to be construed as limited to the particular examples described herein, as these are to be regarded as illustrative, rather than restrictive. The invention is intended to cover all processes and structures that do not depart from the spirit and scope of the invention. For example, in diffractive achromat group 30, it is preferable to mount the diffractive color correction lens 28 to a fiat surface of objective lens 10. However, acceptable performance can be obtained at locations displaced from the objective lens. Additionally, the preceding examples of diffractive achromat 30 show a positive meniscus lens. However, Fig. 18 shows several different configurations of diffractive achromats. The diffractive achromats include groups with positive refractive lenses 38, such as biconvex and meniscus. The diffractive achromats also include groups with negative refractive lenses 40, such as biconcave and meniscus. Although this patent focuses on polymer-based color correcting diffractive lenses, other transparent materials with color correcting diffractive surfaces could be used instead. Fig. 19 shows diffractive achromats with thicker diffractive lenses.

This patent uses diffractive optics with kinoform patterns formed on the surface. However, other types of diffractive elements, such as binary diffractive and holographic-based diffractive elements, can be used to provide the optical corrections taught herein.

This patent has used IR transmitting optics for its examples. However, all the techniques and principles described herein are also applicable to visible optics. Instead of using IR transmitting refractive and diffractive elements, visible transmitting elements can be used. The preferred diffractive element for visible light may not be kinoform diffractive elements. However, there are many techniques known in the art, including binary and holographic, for forming diffractive optical elements for use at visible wavelengths.

## Claims

1. An infrared transmitting achromatic lens group (30), comprising:
an infrared transmitting glass objective lens (10); and a diffractive color correction lens (28) having a substantially flat surface;
**characterized in that** a color correcting diffractive surface (16) is formed on the diffractive color correction lens (28) to reduce chromatic aberrations.

2. The achromatic lens group of claim 1, wherein the second infrared transmitting lens is a polymeric lens.

3. The achromatic lens group of claim 2, wherein the glass lens glass is selected from the group consisting of Ge, chalcogenid glass, ZnS, ZnSe, GaAs, and Ti-1173 glass.

4. The achromatic lens group of Claim 2, wherein the glass lens is a meniscus lens.

5. The achromatic lens group of Claim 4, wherein the polymeric lens is mounted on a flat surface of the glass lens.

6. The achromatic lens group of claim 2, wherein the polymeric lens is disposed near the glass lens.

7. The achromatic lens group of Claim 2, wherein the glass lens is a biconvex lens.

8. The achromatic lens group of Claim 2, wherein the glass lens is a biconcave lens.

9. The achromatic lens group of Claim 2, wherein the polymeric lens has a second flat surface comprising an anti-reflective sub-wavelength structure.

10. The achromatic lens group of claim 2, wherein the second infrared transmitting lens also corrects monochromatic aberrations.

11. The achromatic lens group of Claim 1, wherein the second infrared transmitting lens is formed from a glass.

12. The achromatic lens group of Claim 1, wherein the second infrared transmitting lens also corrects monochromatic aberrations.
